(19) Europäisches Patentamt / European Patent Office / Office européen des brevets

(11) **EP 2 882 249 A1**

(12) **EUROPEAN PATENT APPLICATION**

(43) Date of publication:
**10.06.2015 Bulletin 2015/24**

(51) Int Cl.:
**H04W 72/12** (2009.01)

(21) Application number: **13196089.0**

(22) Date of filing: **06.12.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Telefonaktiebolaget L M Ericsson (publ)**
**164 83 Stockholm (SE)**

(72) Inventors:
• **Sun, Ying**
**172 72 Sundbyberg (SE)**

• **Matti, Mona**
**131 40 Nacka (SE)**
• **Huang, Vincent**
**191 50 Sollentuna (SE)**
• **Voigt, Lotta**
**167 71 Bromma (SE)**
• **Andersson, Eric**
**177 31 Järfälla (SE)**

(74) Representative: **Ericsson**
**Patent Development**
**Torshamnsgatan 21-23**
**164 80 Stockholm (SE)**

(54) **Controlling predictive scheduling**

(57) A method, a method in a network node and a network node in a communicating network for scheduling resources for User Equipments, UEs, served by a network node. Traffic characteristics associated with radio communication with a first UE is obtained whereby a likelihood value of receiving traffic from the first UE is estimated, based at least on the obtained traffic characteristics. The network node then sets a priority weight for scheduling resources to the first UE, based on the estimated likelihood value and subsequently allocates scheduling resources using predictive scheduling for the first UE based on a priority weight comparison with other UEs served by the network node. Thereby the predictively scheduled resources allocated by the network node have a high probability of being used by the UE. The network node is thus able to use predictive scheduling in various traffic load situations without wasting too many resources.

FIG. 4

**Description**

TECHNICAL FIELD

The present disclosure relates to delay in wireless communication networks. More particularly, the disclosure relates to a method, network node and computer program product for controlling predictive scheduling between a mobile station and a wireless communication network.

BACKGROUND

In the 3rd Generation Partnership Project (3GPP) standardization body technologies like Global System for Mobile Communication (GSM), High-Speed Packet Access (HSPA) and Long Term Evolution (LTE) have been and are currently developed.

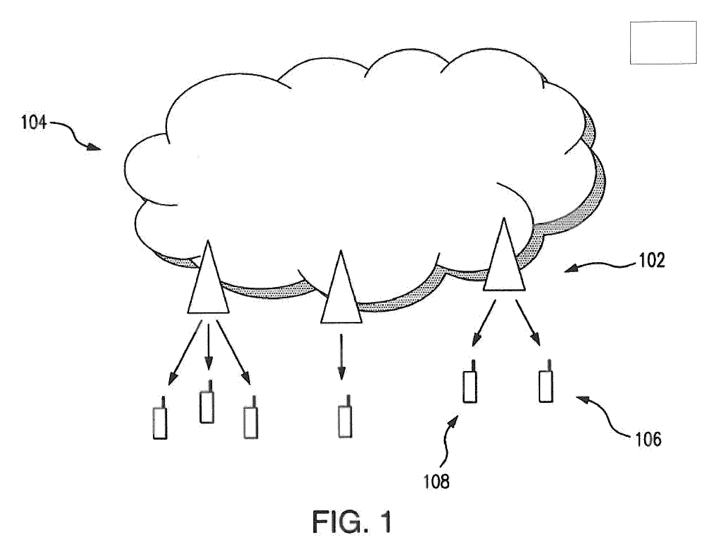

LTE is the latest technology standardised. It uses an access technology based on OFDM (Orthogonal Frequency Division Multiplexing) for the downlink (DL) and Single Carrier FDMA (SC-FDMA) for the uplink (UL). The resource allocation to mobile stations, in LTE denoted user equipment (UE), on both DL and UL is performed adaptively by the concept of fast scheduling, taking into account the instantaneous traffic pattern and radio propagation characteristics of each mobile station. Assigning resources in both DL and UL is performed in a so-called scheduler situated in a base station, in LTE often denoted eNodeB. As illustrated in FIG. 1, LTE transmissions are sent from base stations 102, in a telecommunications network 104, to mobile stations 108,108.

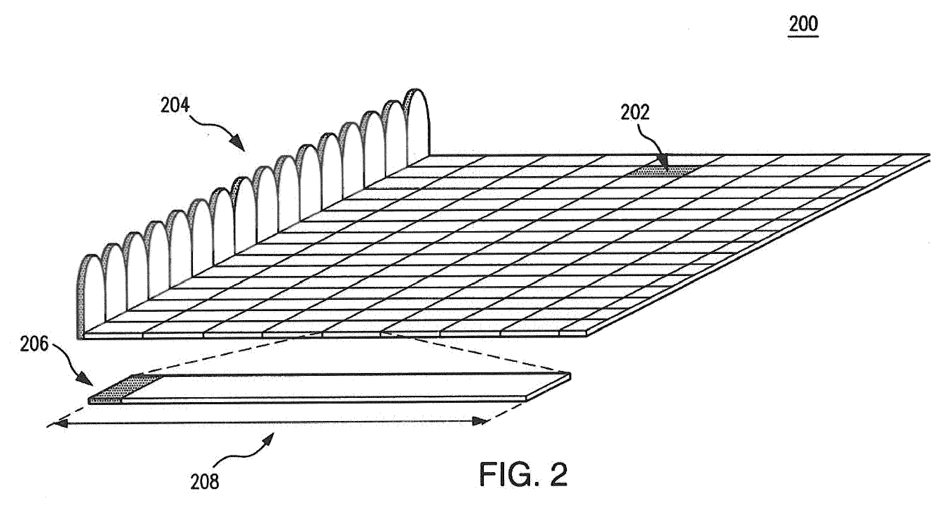

As illustrated in FIG. 2, a sub-frame 200 may be transmitted in accordance with the LTE standard, and may consists of 12 or 14 sub-carriers 204 in the frequency domain. In the time domain, the sub-frame may be divided into a number of OFDM (or SC-FDMA) symbols 208. An OFDM (or SC-FDMA) symbol 208 may include a cyclic prefix 206. A unit of one sub-carrier and one symbol is referred to as a resource element (RE) 202. Thus, a sub-frame may consist of, for example, 84 REs in a 12 x 7 configuration as shown in FIG. 2.

In e.g. LTE, uplink transmissions are scheduled by a base station. A grant is transmitted on the Physical Downlink Control Channel, PDCCH, and the mobile station responds with a transmission using the resources specified in the grant and with the size specified in the grant. The mobile station can let the base station know that it wants to transmit by sending a scheduling request (SR) on the Physical Uplink Control Channel PUCCH at predefined times. Typically the mobile station transmits an SR which is followed by one or many grants, each resulting in one uplink transmission. This is commonly referred to as dynamic scheduling.

With the higher speeds a number of various applications that a user of the mobile station can be engaged in have evolved. It is for instance of interest for a user to involve him- or herself in online games, where small amounts of uplink data are transferred fairly often from the mobile station to another device involved in a game. Here the transferred data may be gaming commands and the other device may be another mobile station or another type of user terminal like a PC or even a server. Gaming is one example of delay-sensitive traffic. The increase of this delay-sensitive traffic and its significant share in the internet traffic leads to the radio interfaces of wireless communication systems having to meet various latency requirements to ensure that a mobile station user can enjoy the activities employing this type of traffic. Another example of delay-sensitive traffic is ping. Ping is for instance used to estimate the delay of a channel as well as to measure the performance in radio systems in order to for instance compare and/or rank different systems.

Setting up of traffic in a wireless communication network is often referred as allocation of resources. When resources are allocated to a mobile station desiring to send data in the uplink, there are normally a number of activities that have to be performed. First the mobile station sends a scheduling request (SR) informing the base station that the mobile station has an unspecified amount of data to send. This is followed by the base station responding with a grant, which grant includes information on what time/frequency resources the mobile station shall use. The mobile station then transfers a Buffer Status Report (BSR) informing the base station that the amount of data the mobile station intends to send is within a predefined range. The amount of data available is specified for logical channel groups rather than individual bearers, After receiving the BSR the base station issues a grant for further data. It is not until it receives this further grant that the mobile station can transmit the actual data it intends. This process is time consuming, especially if the mobile station is to run through the process each time it desires to transfer data.

Instead of dynamic scheduling, semi-persistent scheduling (SPS) can be used. The purpose with SPS is to save resources on the PDCCH when it is known beforehand when data will arrive to the mobile station. When SPS is used, a semi-persistent scheduling interval is signalled to the mobile terminal through the RRC protocol. Special grants (SPS grants/semi-persistent scheduling uplink grants) are then used to configure a recurring grant with the specified interval. One grant can hence be used for multiple transmissions. The semi-persistent grant is valid until it is cancelled by a special grant that explicitly releases the semi-persistent grant. To optimize the power saving with SPS, a mechanism has been added so that no SR is triggered by specified logical channels while an SPS grant is configured.

It is not required that an SR precedes the grant. When the base station knows that a mobile has a periodic service or for some other reason can predict future data arrivals it can transmit a grant to the mobile without waiting for an SR. It is also possible to blindly transmit grants in order to speed up the scheduling and hence reduce the delay. These scheduling methods are called predictive scheduling and the grants are transmitted from the base station to the mobile station on the downlink control channel PDCCH.

WO2012/148331 discloses a method applying predictive scheduling. Upon receipt of a service indicator from a mobile station the base station determines an uplink transmission scheme for the mobile station based on the service indicator. Uplink prescheduling according to the prior art may however result in waste of system resources in case the mobile station has nothing to send and replies to the prescheduling grants including an empty BSR and padding. Therefore predictive scheduling may lead to a waste of resource and is thus restricted to situations when the traffic load is below certain threshold values so that it will not conflict with regular scheduling in higher traffic load situations.

Predictive scheduling is thus traditionally not performed in situations when the traffic load may result in that the traffic generated by predictive scheduling interfere with other/regular types of traffic. Thereby, the above mentioned delay-sensitive traffic will, most likely, experience unsatisfactory traffic delays since the mobile station may have to go through the above mentioned process including SR and BSR every time it has data to send.

SUMMARY

It is an object of embodiments described herein to address at least some of the problems and issues outlined above. It is possible to achieve this object and others by using a method, a method in a network node and a network node as defined in the attached independent claims.

According to one aspect a method is performed in a communicating network for scheduling resources for User Equipments, UEs, served by a network node. In this method traffic characteristics associated with radio communication with a first UE is obtained whereby a likelihood value of receiving traffic from the first UE is estimated, based at least on the obtained traffic characteristics. The network node then sets a priority weight for scheduling resources to the first UE, based on the estimated likelihood value and subsequently allocates scheduling resources using predictive scheduling for the first UE based on comparing the set priority weight with priority weight of at least one other UE served by the network node. Thereby the predictively scheduled resources allocated by the network node have a high probability of being used by the UE. The network node is thus able to use predictive scheduling in various traffic load situations without wasting too many resources.

According to another aspect a method is performed in a radio network node for scheduling resources for User Equipments, UEs, served by the radio network node. In this method the radio network node sets a priority weight for scheduling resources to a first UE wherein the priority weight being based on a likelihood value. The likelihood value being estimated based on obtained traffic characteristics associated with radio communication between the network node and the first UE. The radio network node then allocates scheduling resources using predictive scheduling for the first UE based on comparing the set priority weight with priority weight of at least one other UE served by the network node.

According to yet another aspect a network node of a radio network is provided. The network node is arranged for scheduling resources for User Equipments, UEs, and comprises a setting unit configured to set a priority weight for scheduling resources to a first UE. The priority weight is based on a likelihood value that is estimated based on obtained traffic characteristics associated with radio communication between the network node and the first UE. The network node further comprises a logic unit configured to allocate scheduling resources using predictive scheduling for the first UE based on comparing the set priority weight with priority weight of at least one other UE served by the network node.

Computer program comprising code means which, when run by a processor causes the network node to set a priority weight for scheduling resources to a first UE wherein the priority weight being based on a likelihood value. The likelihood value being estimated based on obtained traffic characteristics associated with radio communication between the network node and the first UE. The code means then, when run by a processor causes the network node to allocate scheduling resources using predictive scheduling for the first UE based on comparing the set priority weight with priority weight of at least one other UE served by the network node.

It should be emphasized that the term "comprises/comprising" when used in this specification is taken to specify the presence of stated features, integers, steps or components, but does not preclude the presence or addition of one or more other features, integers, steps, components or groups thereof.

BRIEF DESCRIPTION OF THE DRAWINGS

The solution according to the present disclosure will now be described in more detail in relation to the enclosed drawings, in which:

FIG. 1 is an illustration of a wireless communication system.
FIG. 2 illustrates an exemplary sub-frame.

FIG. 3 illustrates an exemplary allocation of spectrum resources.

FIG. 4 is a flow chart with actions performed by a network node, according to some possible embodiments.

FIG. 5 is a block diagram of an apparatus in accordance with exemplary embodiments.

FIG. 6 is a more detailed flow chart with actions performed by a network node, according to further possible embodiments.

FIG. 7 is a table illustrating priority weights for different UEs at different time instants.

FIG. 8 is a diagram illustrating a likelihood variation for receiving a burst over time.

FIG. 9 is a table illustrating a likelihood variation for receiving a burst at different times.

## DETAILED DESCRIPTION

In the following description, for purposes of explanation and not limitation, specific details are set forth such as particular architectures, interfaces, techniques, etc. in order to provide a thorough understanding of the present disclosure. However, it will be apparent to those skilled in the art that the solution according to the present disclosure may be practiced in other embodiments that depart from these specific details. In other instances, detailed descriptions of well-known devices, circuits and methods are omitted so as not to obscure the description of the present disclosure with unnecessary detail.

Currently, LTE does not support dedicated data channels; rather, shared channel resources are used in both the downlink and uplink transmissions. These shared resources, Downlink Shared Channel (DL-SCH) and Uplink Shared Channel (UL-SCH), are each controlled by a single scheduler that assigns different parts of the downlink and uplink shared channels to different scheduling entities (e.g., UEs) for reception and transmission, respectively. These schedulers are in full control of in which sub-frame a UE should receive on DL-SCH, or is allowed to transmit on UL-SCH. Scheduling decisions are sent to each UE as downlink assignments and uplink grants. Downlink assignment information and uplink grants may be transmitted as Downlink Control Information (DCI), for instance, using L1/L2 control signaling.

For an uplink (UL) transmission, the portion of the bandwidth assigned to one UE is always a set of contiguous scheduling blocks (SBs) due to the single carrier constraint imposed by the SC-FDMA transmission scheme. These assigned bandwidth resources are indicated in the DCI by a start-SB and an allocation size, which is provided as a number of SBs. LTE currently supports full dynamic scheduling; therefore, the particular bandwidth resource assignment to a UE is only valid for one sub-frame. In the next sub-frame, the same bandwidth resources may be re-assigned, for instance, to another UE.

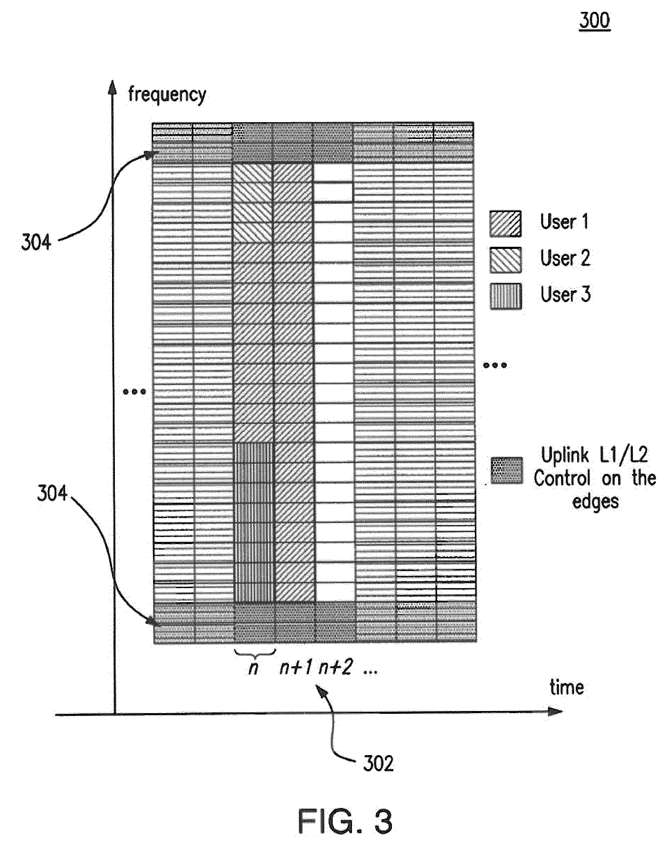

An exemplary UL scheduling result for three scheduling entities is provided in figure 3. The three sub-frames 302 illustrate potential scheduling results that are possible using dynamic scheduling, i.e. according to a normal scheduling procedure. For instance, multiple users may share different parts of the available frequency resources within a single sub-frame, as shown by sub-frame n. Alternatively, all of the frequency resources of a sub-frame may be assigned to one user (sub-frame n+1). Similarly, no users are allocated any frequency resources within sub-frame n+2. In the illustration of Figure 3, the available bandwidth is reduced by four scheduling blocks, SBs, 304 in each sub-frame, which are occupied by uplink L1/L2 control signaling.

Presently, resource allocation depends on the properties of the user population in the system, e.g., the number of users, their traffic models and radio channel characteristics, as well as the algorithm implementing the scheduling functionality. The strategy that defines the manner in which resources in the time and frequency domains are allocated to a set of users is commonly referred to as a scheduling algorithm.

Spectrum resources may be allocated among a plurality of scheduling entities based, at least in part, on the calculated scheduling entity weights. For instance, a device with the highest average scheduling entity priority weight in a given frequency range may be prioritized when allocating spectrum resources. This allows for unused physical resource blocks (PRBs) to be grouped with a neighboring PRB group. Accordingly, different types of scheduling entities with varied amounts of data and transmission properties may be scheduled such that both good spectrum efficiency and good end-user performance may be achieved.

The basis for uplink scheduling is scheduling grants, containing the scheduling decision and providing the UE information about the resources and the associated transport format to use for transmission of the UL-SCH (Uplink Shared Channel) on one component carrier. Only if the UE has a valid grant is it allowed to transmit on the corresponding UL-SCH. Dynamic scheduling grants are valid for one subframe - that is, for each subframe in which the terminal is to transmit on the UL-SCH, the scheduler issues a new grant.

The UE monitors a set of PDCCHs for uplink scheduling grants. Upon detection of a valid uplink grant, the UE will transmit its UL-SCH according to the information in the grant. The UE needs some time to prepare the data to transmit. Therefore, a grant received in subframe n affects the uplink in a later subframe.

For a Frequency Division Duplex (FDD) system the grant timing is straight forward. An uplink grant received in a downlink subframe n triggers an uplink transmission in an uplink subframe n + 4. In a Time Division Duplex (TDD) system the grant timing is a bit more complicated, but yet similar.

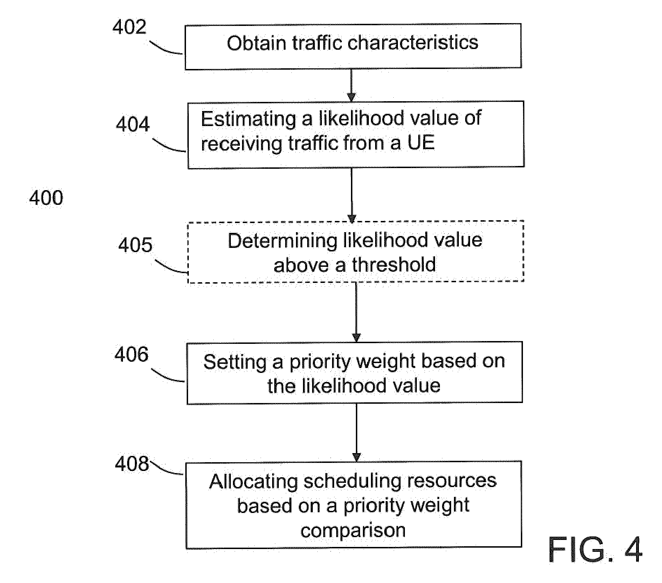

An example of a procedure with actions performed by a system of a communicating network to accomplish the above, will now be described with reference to the flow chart in Fig. 4. This procedure thus enables a network node in a system to perform predictive scheduling of UEs in various traffic load situations without wasting too many resources. It is assumed that the system comprises at least a network node, such as a base station, e.g. an eNodeB or similar, that is currently serving the UE with radio access and that a connection has been established with the UE. The system may also comprise a further node communicating with the network node, such as a control node or similar, wherein the further node may perform one or more of the actions below.

A first **action 402** illustrates that the system obtains traffic characteristics that are associated with and somehow pertain to the radio communication with the UE. Action 402 may be executed more or less at the same time, or even somewhat before e.g. on a continuous basis, as the UE communicates data with the network node serving the UE. At least some of the traffic characteristics may be measured in real-time, e.g. by the system and/or by the UE. Some useful but non-limiting examples of traffic characteristics that may be obtained in this action 402 are presented below. In this context, "data" should be understood broadly to represent any information e.g. related to payload or signaling. This action thus implies a latest activity performed by the UE in terms of communication.

A) One or more services being used by the UE may contribute to the traffic characteristics in that a certain service may require a certain amount or pattern of information to be communicated, e.g. at certain points in time.

B) One or more applications used in the UE may contribute in a similar manner to the traffic characteristics in that a certain application may require a certain amount or pattern of information to be communicated.

C) A radio environment of the radio communication, which may vary more or less significantly e.g. in terms of bandwidth, interference, path loss, coverage, and so forth.

D) A traffic pattern of communicating packets in the radio communication, e.g. depending on time between successive packets, packet size, direction i.e. uplink or downlink, and the number of pending packets in a transmission buffer.

E) Capabilities of the UE, e.g. modulation and coding/decoding abilities, supported number of data streams, support for carrier aggregation and Multiple Input Multiple Output, MIMO.

F) A user behaviour in the radio communication, e.g. pertaining to how the user activates and interacts with an application.

However, the traffic characteristics that could be obtained in action 402 are not limited to the above examples A-F.

In a next **action 404** a likelihood value of receiving traffic from a UE is estimated. Based on the obtained traffic characteristics the network makes an estimation of the likelihood that the network node serving the UE will receive traffic from the UE. This estimation may be made with regards to the next transmission time interval, TTI, or with regards to some other defined time interval, such as 10 or 100 TTIs, or many seconds.

The network node may e.g. predict a waiting time until next data is expected to be communicated with the UE, either in uplink or downlink, based on the obtained traffic characteristics. The network may thus predict a waiting time right after an activity has been performed and completed by the UE, typically a transmission or reception of data. In some possible embodiments, the network node may predict the waiting time upon a downlink transmission of data to the UE, or upon an uplink scheduling grant to the UE, or upon a transmission of data from the UE. During such a waiting time the likelihood value will be estimated as very low, but after expiry of the predicted waiting time the likelihood value will increase, either gradually or in one or more steps.

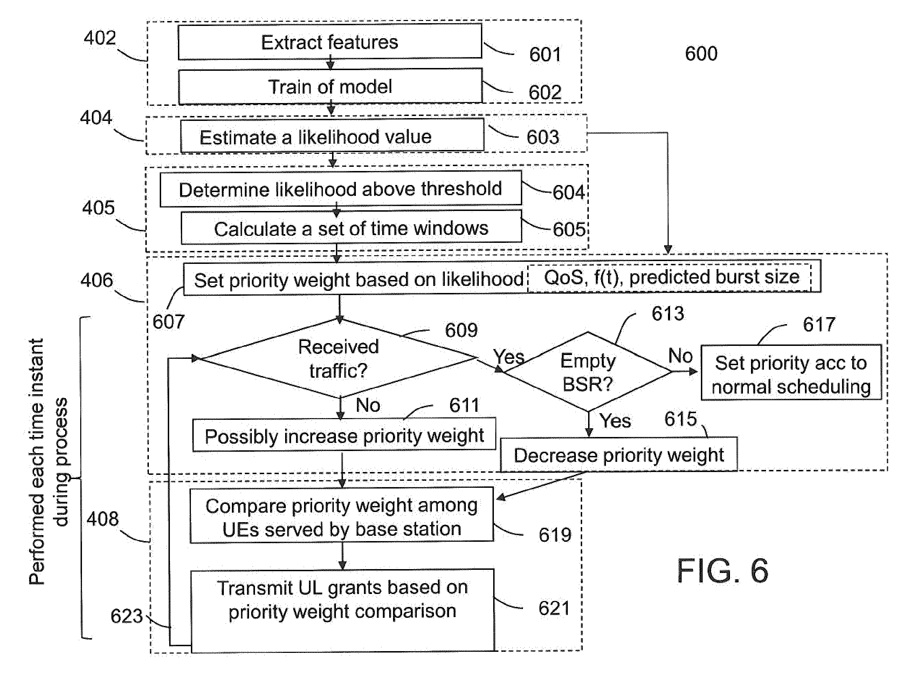

Further possible embodiments include estimating the likelihood value by entering the obtained traffic characteristics into a prediction model that has been created from traffic statistics collected over time in the radio network. It is thus possible to build a prediction model or algorithm from traffic statistics reflecting various features of the traffic occurring over time in the network. Briefly described, the prediction model can be created basically in two stages: extraction of traffic features in the network and training of the model, which will be described in more detail later below, with reference to Figure 6.

In a next, optional, **action 405,** see figure 4, it is determined whether the estimated likelihood value is above a threshold value or not. This estimation may be made with regards to the next TTI, or with regards to some other defined time interval, such as 10 or 100 TTIs, or many seconds. If the determination is made dynamically for each TTI, the comparison can be made with a predefined threshold value, so that every TTI a determination whether or not to continue the procedure for the UE or not is made. If the determination is based on traffic statistics collected over time, the system may define sets of time windows during which time windows the estimated likelihood values exceeds the predefined threshold values. Consequently the procedure is set to continue during such time windows and it is set to end when not within such a time window.

In a following **action 406** a priority weight for scheduling resources to the UE is set based on the estimated likelihood value in action 404. If the estimated likelihood is large, the UE may be set with a high priority weight even though the UE has not sent any SR. Consequently if the estimated likelihood is lower the UE may be set with a low priority weight.

In possible embodiments the priority weight for the UE may vary as function of time. For example, the priority weight may be set to increase as long as the procedure is within a current time window, so that the priority weight is relatively low at the beginning of the time window and increases with time until the end of the time window. Thereby the accuracy of the scheduling may correspondingly increase with the estimated likelihood value. In an alternative, less advanced, embodiment the priority weight may be fixed throughout a time window, i.e. as soon as the threshold value is exceeded the priority weight is set as a constant value within the time window.

In possible embodiments the priority weight may, alternatively or in addition, be based on a predicted size of a burst from the UE. If a burst is expected, e.g. that the estimated likelihood value is high, information regarding a burst size of the expected burst can be used in order to set a reliable priority weight for the UE. If the expected burst size is high, the priority weight will increase and consequently if the expected burst size is low the priority weight will decrease.

Further, the priority weight may, alternatively or in addition, be based on the applied Quality of Service, QoS for the UE. Consequently a high QoS classification will increase the priority weight whereas a low QoS classification will increase the same.

In a next **action 408** scheduling resources using predictive scheduling are allocated for the UE based on comparing the set priority weight with priority weight of at least one other UE served by the network node. The network node may thus compare the priority weights for a number of, preferably all, UEs that are being served by the network node. If the comparison results in the UE getting a sufficient priority weight the network node will allocate scheduling resources to the UE even without recently receiving an SR or BSR from the UE, i.e. by predictively scheduling resources.

Applying the above mentioned procedure the UE may be provided with resources in form of uplink transmission grants independent of the traffic load situation. For example, in case of a high estimated likelihood of receiving traffic from a UE in combination with a high expected burst size, the priority weight for the UE may increase that of dynamically scheduled UEs (UEs having sent BSRs to the serving network node) and consequently predictively scheduled UEs will be allocated resources whereas dynamically scheduled UEs may not.

Applying the above mentioned procedure a low priority weight will be set at a time instant when there is a relatively low probability of burst arrival from the UE and consequently the scheduling resource can be allocated to the other users served by the network node, either those being scheduled using normal scheduling or other prescheduling UEs with higher prediction probability. Accordingly at a time instant when the probability is higher the priority weight is going to be higher and the UE will have larger chance to be allocated with predictively scheduled resources.

Applying the above mentioned procedure the UE may minimize the number of SRs sent to the network node. The SR resources are rather limited and by avoiding SRs these resources are freed up and the overhead, such as number of OFDM-symbols, used for controlling purposes may be lowered.

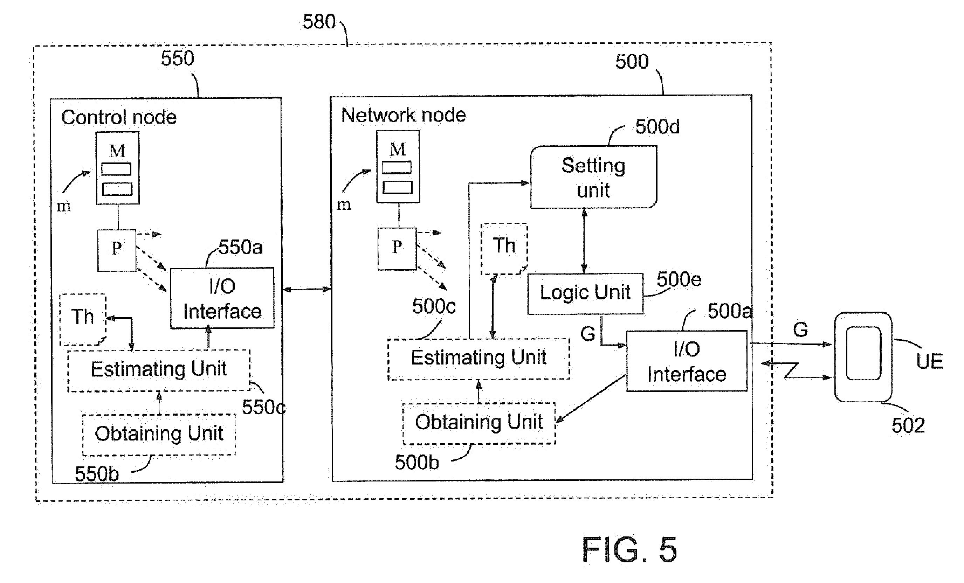

A detailed but non-limiting example of how a system 580 comprising a network node 500 of a radio network may be structured with some possible functional units to bring about the above-described operation of the network node, is illustrated by the block diagram in Fig. 5. In this figure, the network node 500 is arranged for scheduling resources for a UE 502 using predictive scheduling. No special treatment is added in the UE side and it is just monitoring PDCCH which is legacy behaviour. The network node 500 may be configured to operate according to any of the examples and embodiments of employing the solution as described above and as follows.

The network node 500 comprises a suitable **input/output interface 500a** for conducting radio communication with the UE 502 which may be done in a conventional manner. The input/output interface 500a may also conduct communication with corresponding **input/output interface 550a** of other network nodes 550 of the network using radio communication or other means of communication.

According to possible embodiments the network node 500 also comprises an **obtaining unit 500b** configured to obtain traffic characteristics associated with the radio communication, e.g. according to any of the embodiments described for action 402 above.

According to possible embodiments the network node 500 also comprises an **estimating unit 500c** configured to estimate, based at least on the obtained traffic characteristics, a likelihood value of the radio network node receiving traffic from a UE, e.g. according to any of the embodiments described for action 404 above.

In yet another embodiment, the network node is configured to compare the estimated likelihood value with a predefined threshold value Th, e.g. according to any of the embodiments described for action 405 above.

The network node 500 also comprises a **setting unit 500d** for setting a priority weight for scheduling resources to a UE based on the estimated likelihood value, e.g. according to any of the embodiments described for action 406 above.

The network node 500 also comprises a **logic unit 500e,** such as a scheduling unit, configured to allocate scheduling resources using predictive scheduling for a UE based on a priority weight comparison with other UEs served by the radio network node e.g. according to any of the embodiments described for action 408 above. The logic unit 500e may thus be configured to, via the input/output interface 500a, transmit predictively scheduled uplink grants to the UE.

In alternative embodiments one or more of the obtaining unit 500b, the estimating unit 500c and "Th" may be absent from the network node 500 and may instead be positioned as obtaining unit 550b, estimating unit 550c and "Th", respectively, in a control node 550 in communication with the network node 500. The outcome of the processes performed by the units in the control node 550 will thus be communicated to the network node 500 and the appropriate unit there.

The above network node 500 and its functional units may be configured or arranged to operate according to various optional embodiments such as those described above illustrated by Fig 4 and further embodiments and examples to be described below with reference to Figs 6-11.

It should be noted that Fig. 5 illustrates some possible functional units in the system 580 comprising the network node 500 and in some embodiments the control node 550 and the skilled person is able to implement these functional units in practice using suitable software and hardware. Thus, the solution is generally not limited to the shown structures of the system 580, and the functional units 500a-e and 550a-c may be configured to operate according to any of the features described in this disclosure, where appropriate.

The embodiments and features described herein may be implemented in a computer program comprising computer readable code which, when run on a network node, causes the network node to perform the above actions e.g. as described for Fig 4. Further, the above-described embodiments may be implemented in a computer program product comprising a computer readable medium on which a computer program is stored. The computer program product may be a compact disc or other carrier suitable for holding the computer program. The computer program comprises computer readable code which, when run on a radio node, causes the system 580 or network node 500 to perform the above actions. Some examples of how the computer program and computer program product can be realized in practice are outlined below.

The functional units 500a-e and 550a-c described above for Fig 5 may be implemented in the network node 500 and control node 550, respectively, by means of program modules of a respective computer program comprising code means which, when run by a processor "P" causes the network node 500 and control node 550, respectively, to perform the above-described actions and procedures. The processor P may comprise a single Central Processing Unit (CPU), or could comprise two or more processing units. For example, the processor P may include a general purpose microprocessor, an instruction set processor and/or related chips sets and/or a special purpose microprocessor such as an Application Specific Integrated Circuit (ASIC). The processor P may also comprise a storage for caching purposes.

Each computer program may be carried by a computer program product in the network node 500 and control node 550, respectively, in the form of a memory "M" having a computer readable medium and being connected to the processor P. The computer program product or memory M thus comprises a computer readable medium on which the computer program is stored e.g. in the form of computer program modules "m". For example, the memory M may be a flash memory, a Random-Access Memory (RAM), a Read-Only Memory (ROM) or an Electrically Erasable Programmable ROM (EEPROM), and the program modules m could in alternative embodiments be distributed on different computer program products in the form of memories within the network node 500 and control node 550, respectively.

It will now be described, with reference to the flow chart in Fig. 6, a more detailed example of how the above solution may be applied for predictively scheduling resources for a UE. Note process 600 is illustrated with blocks 601 - 623, and they are covered by dotted lines of blocks 402 - 408 to indicate that process 600 is one embodiment of the invention implementing process 400.

It was mentioned above that the likelihood value may be estimated by entering the obtained traffic characteristics into a prediction model that has been created from traffic statistics collected over time in the radio network, and that such a prediction model can be created in two stages including extraction of traffic features and training of the model. These two stages may be performed by using existing procedures which are known as such. An example of such a known procedure that may be used when implementing the solution in practice is outlined in more detail below.

Process 600 begins in **action 601** by having raw data extracted for each data packet that is communicated, such as a timestamp for packet arrival, size of the packet, whether it is communicated in uplink or downlink etc. This raw data needs to be transformed into a feature vector that can be entered into the prediction model. If a pattern is to be described by this feature vector, it is necessary to use raw data from several data packets, e.g. by using a sliding window for the feature extraction. This sliding window can for example cover the last x number of packets or the last y seconds. Interesting characteristics that describe the pattern of communication in a way that is relevant, are then calculated from the raw data, for example inter arrival times between packets. It may be inter arrival times between uplink packets, between downlink packets, or between uplink and downlink packets. One way of describing these inter arrival times could be to create a histogram vector and use that vector as the feature vector. Another example of defining a feature or characteristics could be to perform a suitable discrete Fourier transform that describes the stream of packets in the frequency domain.

After the features are extracted in action 601, the process continues in **action 602** in which pairs of feature vectors and the corresponding time for the next packet arrival are collected. The goal is to train a machine learning model by saying "For feature vector x, I want you to output waiting time y to next packet". This problem is a machine learning problem which lies outside the scope of this disclosure, but several possible algorithms are available. The training may be performed online, that is, as soon as a new feature vector is created and a corresponding waiting time to next packet is determined, the model can be updated. If this is not possible, i.e. due to resource limitations, the information may be saved and training may be performed offline, e.g. during the night.

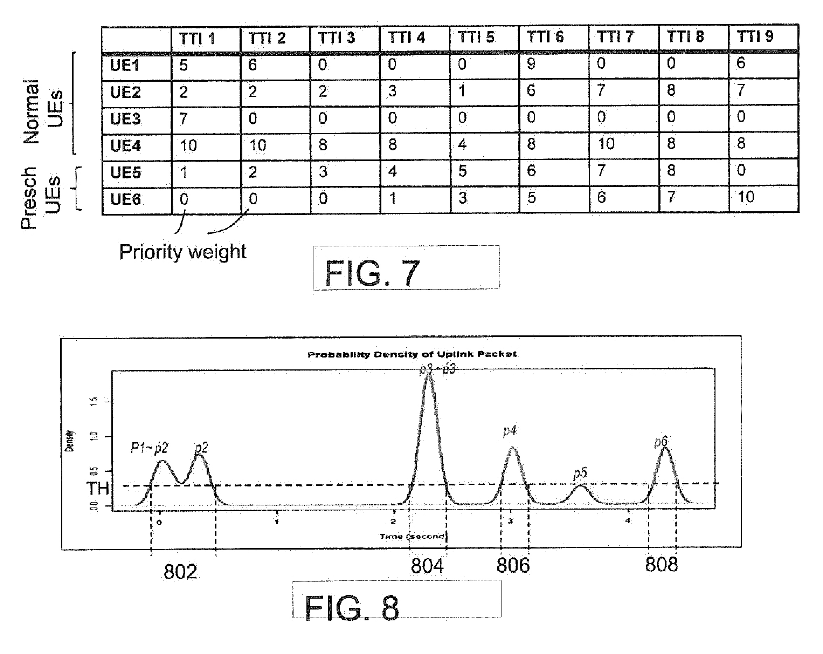

After performing actions 601 and 602, describing one possible embodiment of obtaining traffic characteristics (action 402), the process continues with **action 603** in which the likelihood value of receiving a packet is estimated, e.g. the likelihood of receiving a Radio Link Control, RLC, burst. Whenever a new feature vector is obtained, it is entered into the trained machine learning model. The resulting output of the model is an estimation of how the likelihood value of receiving a packet or burst varies over time. This likelihood value may then be used by the logic described in this disclosure to set a priority weight for scheduling resources to a UE. The outcome of action 603 may e.g. be in form a diagram and/or tables as will be further discussed with reference to figures 7-9.

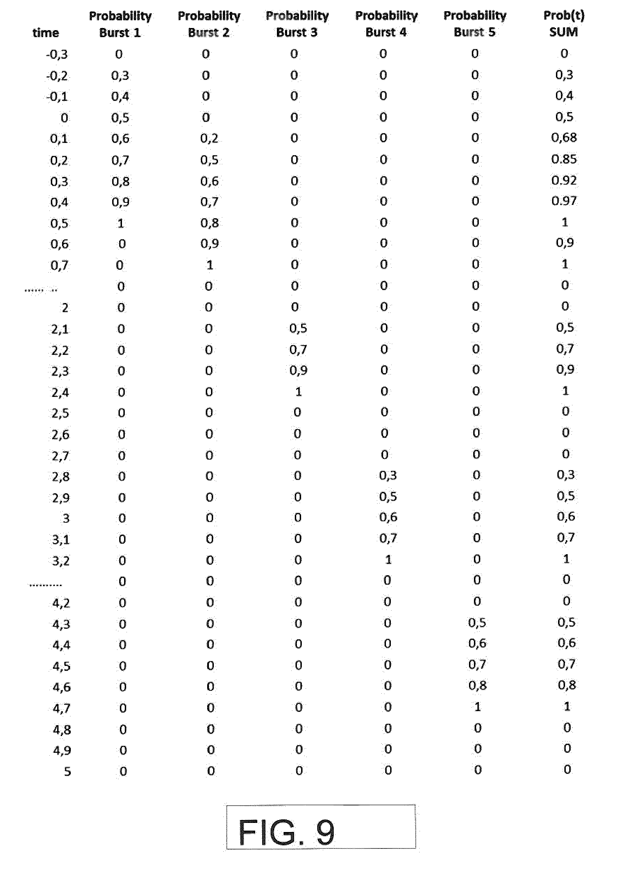

In a possible next **action 604** it is determined whether the likelihood value is above a predefined threshold value or not. The process only continues in case the threshold is exceeded. In case the likelihood value is below the threshold it is not considered relevant to provide resources to a UE, since these resources would most certainly result in UE transmissions comprising only padding. In a possible next **action 605** a set of time windows may be calculated. The time windows being defined as a time window during which the likelihood of receiving a packet from a particular UE is above a predefined threshold value. Examples of such time windows are found in figures 8 and 9 which will be further described below.

Note that the above mentioned actions may be performed in either the network node serving the UE or in another node being in communication with the network node, such as a control node or similar.

After performing actions 604 and 605, describing one possible embodiment of determining that the likelihood value is above a threshold (action 405), the process continues with **action 607** in which a priority weight is set based on the likelihood of receiving traffic (packet(s), RLC burst) from a UE. Note also that in some embodiments action 607 follows immediately after action 603. As described above with reference to action 406, the priority weight may also include QoS, predicted burst size i.e. number of packets, and may also vary over time.

In **action 609** it is checked the amount of traffic the network node has received from the UE, e.g. since a last priority weight comparison. I.e. has the network node received any transmission from the UE comprising at least one or more packets that is not padding? In some embodiments it may be checked whether an RLC burst has been received. RLC data can be of different types depending e.g. on the QoS Class Identifier, QCI, configuration. In some embodiments the check may then include checking if the received RLC data is associated with a specific QCI.

If one or more packets, in accordance with the criteria in the above check, have been received according to alternative "Yes", the process proceeds with **action 613** in which the BSR of the UE is analysed. If action 613 indicates that the UE buffer is not empty according to alternative "*No", i.e. the UE has packets that it wishes to transmit, the process continues with **action 617.** In action 617 the priority weight for the UE is set in accordance with normal scheduling procedure based on e.g. the BSR and QoS. I.e. the predictively scheduling process 600 may end in action 617, but may be resumed once the BSR indicates an empty UE buffer. If, on the other hand, the action 613 indicates that the UE buffer is empty, this means that the UE most probably have already sent all packets that it wish to send in the near future. The process therefore continues with **action 615,** according to alternative "Yes" in which action the priority weight is updated by decreasing the priority weight.

Going back to action 609; if no packets, in accordance with the criteria in the above described check, have been received from the UE, this indicates that the UE has not yet sent the packets that are expected, or at least the network node has not yet received these packets. The process then proceeds with **action 611** according to alternative "No", in which action the priority weight may be updated by increasing the priority weight. Depending on the formula used for setting the priority weight the priority weight may be increased each time instant that passes without received uplink packets from the UE or more seldom. If the accumulated likelihood of receiving packets within the time window has increased, so will the priority weight.

Actions 607-615 describe possible embodiments of setting a priority weight for a UE (action 406) during various time instances during process 600. After performing any of the actions 611 or 615 (or directly following upon action 607 in less advanced embodiments) the process continues with **action 619.** In action 619 the network node performs a priority weight comparison of all UEs that are being served by the network node. In a following **action 621** uplink grants are transmitted from the network node. Based on the comparison the network node may transmit predictively scheduled UL grants to the UE depending on the outcome of the priority weight comparison between the UE and the other UEs served by the network node.

After performing actions 619 and 621, describing one possible embodiment of allocating scheduling resources using predictive scheduling for the first UE based on a priority weight comparison with other UEs served by the network node (action 408), the process may continue with action 609 indicated by arrow "623". This part of the process may then be repeated each time instant, such as each TTI, until either the scheduling goes over to a normal scheduling procedure (action 617) or the process ends for other reasons. One such other reason may be that a current time window, as calculated in action 605, expires without receiving any burst from the UE. Another such reason may be time out of a timer set in association with determining to apply the process for predictive scheduling.

Since the process is based on likelihood estimation, in turn based on obtained traffic characteristics, it is not absolutely certain that a burst will be received from the UE e.g. if the UE doesn't behave as expected. In order to limit the number of not used predictively scheduled grants it may then be appropriate to include such a process termination feature.

FIG. 7 is a table illustrating priority weights for different UEs at different time instants. Every time instant, such as every TTI, the network computes buffer estimate and calculates priority weights for all the UEs (UE1-UE6) that are waiting to be scheduled. That includes both prescheduling UEs (UE5-UE6) and normal scheduling UEs (UE1-UE4). Buffer estimation is updated for a normal UE for which has been obtained a non-zero BSR or a scheduling request. For the prescheduling UEs no such buffer information has been received so the network node has to estimate the expected burst size from the UE and compute the priority weight (action 406) for the UE based on the estimated likelihood value (action 404). The estimated burst size is equal to the predicted size of packets in the UE buffer plus an estimated overhead.

As can be seen in figure 7 in TTI1 UE4 (priority 10) has the highest priority followed by UE3 (7) and UE1 (5). Resources are scheduled accordingly, and the prescheduling UEs UE5 and UE6 are not getting any UL grants. The priority weights for the prescheduling UEs UE5 and UE6 are however seemingly increasing with time - e.g. due to performing actions 609 and 611 each time instant. In TTI4, UE 5 has the second highest priority weight and in TTI5, UE5 has the highest priority weight. At least in TTI5, UE5 was scheduled by the network node, one or several grants were sent and the resource allocated. In TTI6-TTI8 the priority weight continues to increase for the prescheduling UEs. In TTI9 however, the priority weight for UE5 is suddenly set to 0. The reason for this change is that UE5 has used a previously received UL grant and the checks performed in actions 609 and 613 resulted in that the network node had received an RLC burst from UE5 and that the buffer of UE5 was empty. Accordingly the priority weight was drastically decreased, in this case reset to 0 and the prescheduling process may be stopped until a time when the next burst is expected.

In the following, methods for determining that the likelihood value is above a threshold (action 405 and actions 604-605) in accordance with possible embodiments, will be described with reference to figures 8 and 9. Figure 8 is a diagram illustrating a likelihood variation for receiving a burst over time and figure 9 is a table illustrating a likelihood variation for receiving a burst at different times corresponding to the diagram in figure 8. The probability/likelihood $p(t)$, varies over time and $p_i$ depicts local extreme values of likelihood at different times t. A threshold value, TH, may be defined filtering out any likelihood value being below TH so that predictive scheduling will not be applied during these periods. Based on the obtained traffic characteristics it may be estimated that the likelihood value exceeds a certain percentage value, such as 50%, 75% or 100%. If the likelihood value for a UE exceeds TH the UE will then be considered by the network node in the scheduling process. Reference numerals 802, 804, 806 and 808 indicate different time windows during which time windows the likelihood is above TH, meaning that at least one burst is expected from the UE during the respective time window. In the first time window 802 two bursts indicated by p1 and p2 are expected to arrive. Note that local extreme p5 is lower than TH, so the UE will not be considered in the process during this time period.

Note that it is possible to predict multiple bursts p1 and p2 within a time window 802. In this case an accumulated likelihood function of multiple bursts can be produced based on:

$$p(t) = 1 - \Pi(1 - p(i,t)) \qquad \text{equation (1)}$$

Where $p(t)$ is the accumulated likelihood at time t of all bursts within an observed time window and $p(i, t)$ is the accumulated probability of burst i at time t.

Figure 9 illustrates the 5 bursts p1, p2, p3, p4 and p6 that are predicted to arrive at different time instance. The accumulated likelihood of each burst in time is given in each column. The accumulated likelihood for all bursts over time is estimated in the estimating unit and given in last the column. $p(t)$ is sent to the setting unit, and based on which, the setting unit sets a priority weight for a prescheduling UE.

The setting unit may keep track of the time since last burst arrival, t, and derive $p(t)$ by using for example the table in figure 9. The priority weight $W(t)$ may be computed according to the below equation:

$$W(t) = f(W_{max} * p(t) * \alpha) \qquad \text{equation (2)}$$

Where $W_{max}$ is the maximum priority weight of the UE, $p(t)$ is the accumulated likelihood at time t. $\alpha$ is an internal parameter configured by network node and may also be used to reflect the prediction accuracy of a certain likelihood algorithm and it can also be adaptively modified based on feedback information of the likelihood function p(t). Wmax will be reached when the accumulated likelihood is equal to 1. Wmax is a configured parameter depending on a radio bearer priority of the UE. The priority weight is sent to the logic unit where resources to the UEs served by the network node are allocated.

The logic unit compares the priority weight with the other UEs priority weight and makes prescheduling decision. The prescheduling UE with higher weight (higher likelihood of burst arrival) will be prioritized over any other prescheduling UE which has lower likelihood of burst arrival. It is also possible to prioritize the prescheduling UE that has higher QoS priority over the normal scheduling UEs having a non-empty UE buffer but with a lower QoS priority. Thereby, QoS for prescheduling UEs can be fulfilled even in high load situation. When a burst is predicted with low likelihood, the priority weight will correspondingly be lower. The other prescheduling UEs with higher likelihood of burst arrival or the normal scheduling UEs with non-empty UE buffers will be allocated with the scheduling resource and thus the resource wastage can be further reduced.

A non-limiting example context of a wireless communication network is a cellular network such as a Universal Mobile Telecommunications System (UMTS) network or a Long Term Evolution (LTE) network. These are merely some examples of some types of networks in which the invention may be implemented. Several other types of networks exist.

In predictive scheduling a UE receives uplink transmission grants - also called scheduling grants, uplink grants or transmission grants - without actual knowledge of the UE buffer content. The data transmission requirements of the UE can then be estimated. It is here possible to monitor the behaviour of the UE and use obtained statistics to control the amount of data and the periodicity of the data that the network node is to receive from the UE.

## Claims

1. A method in a radio network for scheduling resources for User Equipments, UEs, served by a network node, the method comprising:

   - obtaining (402) traffic characteristics associated with radio communication between the network node and a first UE;
   - estimating (404), based at least on the obtained traffic characteristics, a likelihood value of the network node receiving traffic from the first UE;
   - setting (406) a priority weight for scheduling resources to the first UE, based on the estimated likelihood value; and
   - allocating (408) scheduling resources using predictive scheduling for the first UE based on comparing the set priority weight with priority weight of at least one other UE served by the network node.

2. A method according to claim 1, further comprising the step of determining (405) that the likelihood value is above a predefined threshold value.

3. A method according to claim 2, further comprising calculating (605) a set of time windows during which the likelihood value of receiving traffic from the first UE is above the threshold value.

4. A method according to any previous claim, further comprising setting (607) the priority weight for the first UE to vary over time.

5. A method according to any previous claim, further comprising setting (607) the priority weight for the first UE based, at least in part, on a predicted size of traffic predicted from the first UE.

6. A method according to any previous claim, further comprising setting (607) the priority weight, at least in part, based on the applied Quality of Service, QoS for the first UE.

7. A method according to any previous claim, further comprising updating (611, 615) the priority weight for the first UE based on the amount of traffic received (609) from the first UE since the last priority weight comparison (619).

8. A method according to claim 7, wherein updating comprising increasing (611) the priority weight for the first UE if no traffic has been received (609) since the last priority weight comparison (619).

9. A method according to claim 7, further comprising decreasing (615) the priority weight for the first UE if traffic has been received (609) since the last priority weight comparison (619).

10. A method according to claim 7, further comprising setting (617) the priority weight for the first UE based on a received Buffer Status Report, BSR, if traffic has been received (609) since the last priority weight comparison (619).

11. A method according to any previous claim, wherein the allocating step (508) comprises comparing (619) the priority weight of all UEs served by the network node and transmitting (621) predictively scheduled uplink grants to the first UE if the priority weight for the first UE is higher than other UEs served by the network node.

12. A method in a radio network node (500) for scheduling resources for User Equipments, UEs, served by the radio network node, the method comprising:

- setting (406) a priority weight for scheduling resources to a first UE, the priority weight being based on a likelihood value estimated based on obtained traffic characteristics associated with radio communication between the network node and the first UE; and
- allocating (408) scheduling resources using predictive scheduling for the first UE based on comparing the set priority weight with priority weight of at least one other UE served by the network node.

13. A network node (500) of a radio network, the network node being arranged for scheduling resources for User Equipments, UEs, the network node comprising:

- a setting unit (500d) configured to set a priority weight for scheduling resources to a first UE, the priority weight being based on a likelihood value estimated based on obtained traffic characteristics associated with radio communication between the network node and the first UE; and
- a logic unit (500e) configured to allocate (508) scheduling resources using predictive scheduling for the first UE based on comparing the set priority weight with priority weight of at least one other UE served by the network node.

14. A network node (500) according to claim 13, the network node being further configured to perform the method of any of claims 1-11.

15. Computer program comprising code means which, when run by a processor (P) causes the processor to perform the method as set out in at least one of claims 1-12.

FIG. 1

EP 2 882 249 A1

FIG. 2

EP 2 882 249 A1

300

frequency

304

304

User 1

User 2

User 3

Uplink L1/L2 Control on the edges

n  n+1 n+2 ...

time

302

FIG. 3

EP 2 882 249 A1

402 — Obtain traffic characteristics

404 — Estimating a likelihood value of receiving traffic from a UE

400

405 — Determining likelihood value above a threshold

406 — Setting a priority weight based on the likelihood value

408 — Allocating scheduling resources based on a priority weight comparison

FIG. 4

FIG. 5

FIG. 6

|  | TTI 1 | TTI 2 | TTI 3 | TTI 4 | TTI 5 | TTI 6 | TTI 7 | TTI 8 | TTI 9 |
|---|---|---|---|---|---|---|---|---|---|
| UE1 | 5 | 6 | 0 | 0 | 0 | 9 | 0 | 0 | 6 |
| UE2 | 2 | 2 | 2 | 3 | 1 | 6 | 7 | 8 | 7 |
| UE3 | 7 | 0 | 0 | 0 | 0 | 0 | 0 | 0 | 0 |
| UE4 | 10 | 10 | 8 | 8 | 4 | 8 | 10 | 8 | 8 |
| UE5 | 1 | 2 | 3 | 4 | 5 | 6 | 7 | 8 | 0 |
| UE6 | 0 | 0 | 0 | 1 | 3 | 5 | 6 | 7 | 10 |

Normal UEs: UE1–UE4
Presch UEs: UE5–UE6

Priority weight

## FIG. 7

Probability Density of Uplink Packet

P1~P2, P2, P3~P3, p4, p5, p6

802, 804, 806, 808

Density — 15, 10, 05, TH, 00

Time (second) — 0, 1, 2, 3, 4

## FIG. 8

| time | Probability Burst 1 | Probability Burst 2 | Probability Burst 3 | Probability Burst 4 | Probability Burst 5 | Prob(t) SUM |
|---|---|---|---|---|---|---|
| -0,3 | 0 | 0 | 0 | 0 | 0 | 0 |
| -0,2 | 0,3 | 0 | 0 | 0 | 0 | 0,3 |
| -0,1 | 0,4 | 0 | 0 | 0 | 0 | 0,4 |
| 0 | 0,5 | 0 | 0 | 0 | 0 | 0,5 |
| 0,1 | 0,6 | 0,2 | 0 | 0 | 0 | 0,68 |
| 0,2 | 0,7 | 0,5 | 0 | 0 | 0 | 0.85 |
| 0,3 | 0,8 | 0,6 | 0 | 0 | 0 | 0.92 |
| 0,4 | 0,9 | 0,7 | 0 | 0 | 0 | 0.97 |
| 0,5 | 1 | 0,8 | 0 | 0 | 0 | 1 |
| 0,6 | 0 | 0,9 | 0 | 0 | 0 | 0,9 |
| 0,7 | 0 | 1 | 0 | 0 | 0 | 1 |
| ...... .. | 0 | 0 | 0 | 0 | 0 | 0 |
| 2 | 0 | 0 | 0 | 0 | 0 | 0 |
| 2,1 | 0 | 0 | 0,5 | 0 | 0 | 0,5 |
| 2,2 | 0 | 0 | 0,7 | 0 | 0 | 0,7 |
| 2,3 | 0 | 0 | 0,9 | 0 | 0 | 0,9 |
| 2,4 | 0 | 0 | 1 | 0 | 0 | 1 |
| 2,5 | 0 | 0 | 0 | 0 | 0 | 0 |
| 2,6 | 0 | 0 | 0 | 0 | 0 | 0 |
| 2,7 | 0 | 0 | 0 | 0 | 0 | 0 |
| 2,8 | 0 | 0 | 0 | 0,3 | 0 | 0,3 |
| 2,9 | 0 | 0 | 0 | 0,5 | 0 | 0,5 |
| 3 | 0 | 0 | 0 | 0,6 | 0 | 0,6 |
| 3,1 | 0 | 0 | 0 | 0,7 | 0 | 0,7 |
| 3,2 | 0 | 0 | 0 | 1 | 0 | 1 |
| .......... | 0 | 0 | 0 | 0 | 0 | 0 |
| 4,2 | 0 | 0 | 0 | 0 | 0 | 0 |
| 4,3 | 0 | 0 | 0 | 0 | 0,5 | 0,5 |
| 4,4 | 0 | 0 | 0 | 0 | 0,6 | 0,6 |
| 4,5 | 0 | 0 | 0 | 0 | 0,7 | 0,7 |
| 4,6 | 0 | 0 | 0 | 0 | 0,8 | 0,8 |
| 4,7 | 0 | 0 | 0 | 0 | 1 | 1 |
| 4,8 | 0 | 0 | 0 | 0 | 0 | 0 |
| 4,9 | 0 | 0 | 0 | 0 | 0 | 0 |
| 5 | 0 | 0 | 0 | 0 | 0 | 0 |

# FIG. 9

| | Europäisches Patentamt<br>European Patent Office<br>Office européen des brevets | **EUROPEAN SEARCH REPORT** | Application Number<br>EP 13 19 6089 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2013/085441 A1 (ERICSSON TELEFON AB L M [SE]; SUN YING [SE]; FANTAYE GIRUM [SE]) 13 June 2013 (2013-06-13)<br>* abstract *<br>* page 1, line 11 - page 4, line 17 *<br>* page 5, line 19 - page 24, line 27 *<br>----- | 1-15 | INV.<br>H04W72/12 |
| X | US 2002/176380 A1 (HOLTZMAN JACK M [US] ET AL) 28 November 2002 (2002-11-28)<br>* abstract *<br>* paragraphs [0006] - [0009], [0015] - [0029] *<br>----- | 1,2,4-7, 10-15 | |
| X | EP 2 073 463 A1 (NOKIA SIEMENS NETWORKS SPA [IT]; NOKIA SIEMENS NETWORKS OY [FI]) 24 June 2009 (2009-06-24)<br>* abstract *<br>* paragraphs [0006] - [0017], [0020] - [0053] *<br>----- | 1,2,4-7, 11-15 | |
| | | | TECHNICAL FIELDS SEARCHED (IPC)<br><br>H04W |

The present search report has been drawn up for all claims

| Place of search | Date of completion of the search | Examiner |
|---|---|---|
| The Hague | 16 April 2014 | Sidoti, Filippo |

EPO FORM 1503 03.82 (P04C01)

## ANNEX TO THE EUROPEAN SEARCH REPORT
## ON EUROPEAN PATENT APPLICATION NO.

EP 13 19 6089

This annex lists the patent family members relating to the patent documents cited in the above-mentioned European search report.
The members are as contained in the European Patent Office EDP file on
The European Patent Office is in no way liable for these particulars which are merely given for the purpose of information.

16-04-2014

| Patent document cited in search report | | Publication date | Patent family member(s) | | Publication date |
|---|---|---|---|---|---|
| WO 2013085441 | A1 | 13-06-2013 | NONE | | |
| US 2002176380 | A1 | 28-11-2002 | BR | 0208834 A | 18-01-2005 |
| | | | CN | 1507756 A | 23-06-2004 |
| | | | EP | 1378136 A2 | 07-01-2004 |
| | | | JP | 2004529562 A | 24-09-2004 |
| | | | KR | 20030089516 A | 21-11-2003 |
| | | | TW | I231716 B | 21-04-2005 |
| | | | US | 2002176380 A1 | 28-11-2002 |
| | | | US | 2004062219 A1 | 01-04-2004 |
| | | | WO | 02085054 A2 | 24-10-2002 |
| EP 2073463 | A1 | 24-06-2009 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012148331 A